(19) Europäisches Patentamt
European Patent Office
Office européen des brevets

(11) Veröffentlichungsnummer: **0 164 666**
**B1**

(12) # EUROPÄISCHE PATENTSCHRIFT

(45) Veröffentlichungstag der Patentschrift: **23.11.88**

(51) Int. Cl.⁴: **B 01 J 13/02,** B 41 M 5/00

(21) Anmeldenummer: **85106762.9**

(22) Anmeldetag: **01.06.85**

(54) **Kontinuierliche Herstellung von Mikrokapseldispersionen.**

(30) Priorität: **13.06.84 DE 3421865**

(43) Veröffentlichungstag der Anmeldung: **18.12.85 Patentblatt 85/51**

(45) Bekanntmachung des Hinweises auf die Patenterteilung: **23.11.88 Patentblatt 88/47**

(84) Benannte Vertragsstaaten: **BE CH DE FR GB IT LI NL SE**

(56) Entgegenhaltungen:
**DE-A-3 245 801**
**FR-A-1 415 039**
**GB-A-2 011 341**

(73) Patentinhaber: **BAYER AG, Konzernverwaltung RP Patentabteilung, D-5090 Leverkusen 1 Bayerwerk (DE)**

(72) Erfinder: **Dahm, Manfred, Dr., Am Falkenberg 29, D-5090 Leverkusen 3 (DE)**
Erfinder: **Jabs, Gert, Dr., Wingensiefer Kamp 25, D-5068 Odenthal (DE)**
Erfinder: **Wawra, Georg, Dipl.- Ing., Saarbrücker Strasse 30, D-5090 Leverkusen 1 (DE)**

**EP 0 164 666 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein Verfahren zur Herstellung von Mikrokapseldispersionen nach dem Polyadditionsverfahren, worin eine inerte organische Flüssigkeit kontinuierlich mit einem darin nicht löslichen Polyisocyanat unter starker Turbulenz gemischt wird, diese Mischung als disperse Phase in einer wäßrigen Phase emulgiert und die gebildete Emulsion kontinuierlich mit einem Polyamin umgesetzt wird.

Verfahren zur Herstellung von Mikrokapseln durch Grenzflächenpolyaddition zwischen Polyisocyanaten und Polyaminen sind bekannt und beispielsweise beschrieben in den Deutschen Offenlegungsschriften 2 109 335; 2 251 381; 2 242 910; 2 120 921; 2 311 712 und 2 523 586.

Mit den bekannten Verfahren werden Mikrokapseldispersionen guter Qualität und enger Korngrößenverteilung nur erhalten, wenn das verwendete Polyisocyanat in der dispersen organische Phase gelöst ist. Verwendet man als organische Phase Mischungen aus inerten Flüssigkeiten und darin unlöslichen Polyisocyanaten, so kann ein Teil der Tröpfchen während der Emulgierung in der wäßrigen Phase und der anschließenden Umsetzung koalescieren und es werden in der Größe sehr stark divergierende Tröpfchen erhalten. Ferner ist die Verteilung und Konzentration des Polyisocyanats in den "Öltröpfchen" ungleichmäßig, so daß bei der folgenden Grenzflächenpolyaddition Mikrokapseln mit verschiedenen Wandstärken erhalten werden. Es kann sogar Öltröpfchen in der Emulsion geben, die gar kein Isocyanat enthalten und daher nicht verkapselt werden können. Die so erhaltene Mikrokapseldispersion hat jedenfalls ein schlechtes, für technische Zwecke vielfach unbrauchbares breites Verteilungsspektrum der Kapseldurchmesser und enthält undichte Mikrokapseln sowie freies Kernmaterial.

Aus den genannten Gründen sind in bisher bekannten Grenzflächenverfahren zur Mikroverkapselung nur Polyisocyanate und Kernmaterialien verwendet worden, die homogen mischbar sind und nach der Mischung eine homogene organische Phase darstellen, welche emulgiert wird und das Wandpolymere bildet. Wenn das Polyisocyanat im Lösungsmittel unlöslich ist, hat man versucht, es durch ein leichtflüchtiges Hilfslösungsmittel löslich zu machen. Da dieses Hilfslösungsmittel bei oder während der Kapselwandbildung wieder entfernt werden muß, ist diese Arbeitsweise sehr umständlich.

Gerade für Farbstoffvorläufer enthaltende Mikrokapseln zur Herstellung kohlefreier Durchschreibepapiere ist ein enges Verteilungsspektrum der Kapseldurchmesser für gute Schriftschärfe der Durchschriften erforderlich. Undichte Mikrokapseln setzen Farbstoffvorläufer ohne Druckanwendung frei, wodurch sich das Papier verfärbt. Dünne Kapselwände steigern aufgrund ihrer Druckempfindlichkeit die Verschmutzungsneigung der Papiere, während zu starke Kapselwände die Mikrokapseln bei geringem Schreibdruck nicht brechen lassen, was die Durchschrift verschlechtert.

Es wurde nun gefunden, daß man "inhomogene" organische Phasen ohne Nachteil zur Herstellung von Mikrokapseln verwenden kann, wenn man geeignete wandbildende Polyisocyanate und Kernmaterialien in einer geeigneten Weise unter Anwendung von Turbulenz kontinuierlich zusammenführt, anschließend in der wäßrigen Phase eine Emulsion herstellt und die Grenzflächenreaktion durchführt.

Gegenstand der Erfindung ist demnach ein kontinuierliches Verfahren zur Herstellung von Mikrokapseln durch Grenzflächenpolyaddition von Polyisocyanaten und H-aktiven Verbindungen, das dadurch gekennzeichnet ist, daß man in einer ersten Stufe unter starker Turbulenz kontinuierlich eine Emulsion herstellt aus einer inerten organischen Flüssigkeit und einem in der inerten Flüssigkeit unlöslichen Polyisocyanat, und daß man in einer zweiten Stufe die so erhaltene Emulsion mittels eines Emulsionsgetätes kontinuierlich in einer wäßrigen Phase dispergiert und zu der dabei entstandenen Doppelemulsion anschließend ein Polyamin zufügt und mit dem Polyisocyanat an der Grenzfläche polyaddiert.

Gegenstand der Erfindung ist ferner die Herstellung von Farbstoffvorläufer enthaltenden Mikrokapseln und deren Verwendung zur Herstellung kohlefreier Durchschreibepapiere.

Für die Durchführung des erfindungsgemäßen Verfahrens können eingesetzt werden:

Als Polyisocyanatverbindungen aliphatische, cycloaliphatische, araliphatische, aromatische und heterocyclische Polyisocyanate, wie sie z. B von W. Siefken in Justus Liebigs, Annalen der Chemie, 562, Seiten 75 bis 136, beschrieben werden, beispielsweise Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat, sowie beliebige Gemische dieser Isomeren, 1-Isocyanato-3,3,5-trimetyl-5-isocyanatomethylcyclohexan (DAS 1 202 785, US-Patentschrift 3 401 190), 2,4- und 2,6-Hexahydro-toluylendiisocyanat, sowie beliebige Gemische dieser Isomeren, Hexahydro-1,3- und/oder -1,4-phenylen-diisocyanat, Perhydro-2,4'-und/oder -4,4'-diphenylmethan-diisocyanat, 1,3- und 1,4-Phenylen-diisocyanat, 2,4- und 2,6-Toluylendiisocyanat, sowie beliebige Gemische dieser Isoreren, Diphenylmethan-2,4'- diisocyanat, Triphenylmethan-4,4',4"triisocyanat, Polyphenyl-polymethylen-polyisocyanate, wie sie durch Anilin-Formaldehyd-Kondensation und anschließende Phosgenierung erhalten und z. B. in den britischen Patentschriften 874 430 und 848 671 beschrieben werden, m- und p-Isocyanatophenyl-sulfonylisocyanate gemäß der US-Patentschrift 3 454 606, perchlorierte Arylpolyisocyanate, wie sie z. B. in der deutschen Auslegeschrift 1 157 601 (US-Patentschrift 3 277 138) beschrieben werden, Carbodiimidgruppen aufweisende Polyisocyanate, wie sie in der deutschen Patentschrift 1 092 007 (US-Patentschrift 3 152 162) beschrieben werden, Diisocyanate, wie sie in der US-Patentschrift 3 492 330 beschrieben werden, Allophanatgruppen aufweisende Polyisocyanate, wie sie z. B. in der britischen Patentschrift 761 626 und der veröffentlichten holländischen Patentanmeldung 7 102 524 beschrieben werden. Isocyanuratgruppen aufweisende Polyisocyanate, wie sie z. B. in der US-Patentschrift 3 001 973, in den deutschen Patentschriften 1 022 789, 1 222 067 und 1 027 394, sowie in den deutschen

Offenlegungsschriften 1 929 034 und 2 004 048 beschrieben werden, Urethangruppen aufweisende Polyisocyanate, wie sie z. B. in der belgischen Patentschrift 752 261 oder in der US-Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z. B. in der deutschen Patentschrift 1 101 394 (US-Patentschriften 3 124 605 und 3 201 372) sowie in der britischen Patentschrift 889 050 beschrieben werden, durch Telomerisationsreaktion hergestellte Polyisocyanate, wie sie z. B. in der US-Patentschrift 3 654 106 beschrieben werden, Estergruppen aufweisende Polyisocyanate, wie sie zum Beispiel in den britischen Patentschriften 965 474 und 1 072 956, in der US-Patentschrift 3 567 763 und in der deutschen Patentschrift 1 231 688 genannt werden, Umsetzungsprodukte der obengenannten Isocyanate mit Acetalen gemäß der deutschen Patentschrift 1 072 385, polymere Fettsäurereste enthaltende Polyisocyanate gemäß der US-Patentschrift 3 455 883.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Geeignete modifizierte aliphatische Isocyanate sind solche auf Basis von Hexamethylen-1,6-diisocyanat, m-Xylylen-diisocyanat, 4,4'-Diisocyanat-dicyclohexylmethan bzw. Isophorondiisocyanat, die pro Molekül mindestens zwei funktionelle Isocyanatgruppen besitzen.

Geeignet sind ferner Polyisocyanate auf Grundlage von Derivaten des Hexamethylen-1,6-diisocyanats mit Biuretstruktur gemäß DE-AS-1 101 394, DE-AS-1 543 178, DE-OS-1 568 017, DE-OS-1 931 055.

Ferner sind einsetzbar Polyisocyanato-polyuretonimine, wie sie durch Carbodiimidisierung von Biuretgruppen enthaltendem Hexamethylen-1,6-diisocyanat mit Phosphor-organischen Katalysatoren entstehen, durch weitere Umsetzung primär gebildeter Carbodiimidgruppen mit Isocyanatgruppen zu Uretonimingruppen.

Es können auch Isocyanurat-modifizierte Polyisocyanate mit mehr als zwei endständigen Isocyanatgruppen verwendet werden. Speziell ist in der DE-OS-2 839 133 die Herstellung Isocyanurat-modifizierter Polyisocyanate auf Basis Hexamethylendiisocyanat beschrieben. Die übrigen können analog erhalten werden.

Geeignet sind ferner Diisocyanate der Formel (I)

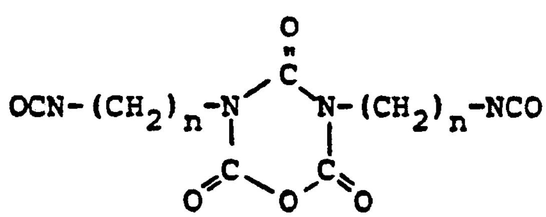

(I)

$n = 3 - 6$

Es können auch Gemische aus den genannten modifizierten aliphatischen und den genannten aromatischen Isocyanaten, insbesondere Diphenylmethandiisocyanaten, die gegebenenfalls modifiziert sein können, verwendet werden.

Zur Grenzflächenreaktion mit den Isocyanaten geeignete "Vernetzer" sind aliphatische, primäre oder sekundäre Di- und Polyamine, z. B.: Ethylendiamin-(1,2), Bis (3-aminopropyl)-amin, Hydrazin, Hydrazinethanol-(2), Bis-(2-methylaminoethyl)-methylamin, 1,4-Diaminocyclohexan, 3-Amino-1-methyl-aminopropan, N-Hydroxy-ethyl-ethylendiamin, N-Methyl-bis-(3-aminopropyl)-amin, 1,4-Diamino-n-butan, 1,6-Diamino-n-hexan, Ethylen-(1,2)-diamin-N-ethyl-sulfonsäure (als Alkalisalz), 1-Aminoethylendiamin-(1,2), Bis-N-N'aminoethyl)-ethylendiamin-(1,2). Hydrazin und seine Salze werden im vorliegenden Zusammenhang ebenfalls als Diamin angesprochen.

Beispiele für Farbstoffvorläufer sind Triphenylmethanverbindungen, Diphenylmethanverbindungen, Xanthenverbindungen, Thiazinverbindungen, Spiropyranverbindungen.

Insbesondere sind geeignet:

Triphenylmethanverbindungen: 3,3-Bis-(p-dimethylaminophenyl)-6-dimethylaminophthalid ("Kristallviolettlacton", nachstehend als "C.V.L" bezeichnet) und 3,3-Bis-(p-dimethylaminophenyl)-phthalid ("Malachitgrünlacton"),

Diphenylmethanverbindungen: 4,4'-Bis-dimethylaminobenzhydrylbenzylether, N-Halogenphenyl-leucauramin, N-β-Naphthylleucauramin, N-2,4,5-Trichlorphenylleucauramin, N-2,4-Dichlorphenylleucauramin;

Xanthenverbindungen: Rhodamin-β-anilinolactam, Rhodamin-β-(p-nitroanilin)-lactam, Rhodamin-β-(p-chloranilin)-lactam, 7-Dimethyl-amin-2-methoxyfluoran, 7-Diethylamin-3-methoxyfluoran, 7-Diethylamin-3-methylfluoran, 7-Diethylamin-3-chlorfluoran), 7-Diethylamin-3-chlor-2-methylfluoran, 7-Diethylamin-2,4-dimethylfluoran, 7-Diethylamin-2,3-dimethylfluoran, 7-Diethylamin-(3-acetylmethylamin)-fluoran, 7-Diethylamin-3-methylfluoran, 3,7-Diethylaminfluoran, 7-Diethylamino-3-(dibenzylamin)-fluoran, 7-Diethylamin-3-(methylbenzylamin)-fluoran. 7-Diethylamin-3-(chlorethylmethylamino)-fluoran, 7-Diethylamin-3-(dichlorethylamin)-fluoran, 7-Diethylamin-3-(diethylamin)-fluoran;

Thiazinverbindungen: N-Benzoylleucomethylenblau, o-Chlorbenzoylleucomethylenblaut, p-Nitrobenzoylleucomethylenblau;

Spiroverbindungen: 3-Methyl-2,2-spiro-bis-(benzo(f)-chromen).

Lösungsmittel, die Farbstoffvorläufer lösen, sind z. B. chloriertes Diphenyl, chloriertes Paraffin, Baumwollsamenöl, Erdnußöl, Siliconöl, Trikresylphosphat, Monochlorbenzol, ferner teilhydrierte Terphenyle, alkylierte Diphenyle, alkylierte Naphthaline, Arylether, Arylalkylether, höher alkyliertes Benzol und andere.

Häufig werden den Lösungsmitteln Verdünnungsmittel zugesetzt, wie beispielsweise Kerosin, n-Paraffine, Isoparaffine.

Die zur Emulgierung der Farbgeberlösung verwendete Phase enthält erfindungsgemäß Emulgatoren und/oder Dispergatoren. Als Dispergator kann beispielsweise teilverseiftes Polyvinylacetat verwendet werden.

Eine zur Durchführung des erfindungsgemäßen Verfahrens geeignete Vorrichtung ist in Fig. 1 schematisch dargestellt.

Im Behälter (1) befindet sich das im erfindungsgemäßen Verfahren einzusetzende Polyisocyanat und im Behälter (2) die zu verwendende inerte organische Phase. Beide werden über die Dosierpumpen (5a) bzw. (5b) kontinuierlich im gewünschten Verhältnis in die Mischzone (6) dosiert.

Als Dosierpumpen (5) können handelsübliche Pumpen verwendet werden, die eine genaue Dosierung von Flüssigkeiten erlauben, beispielsweise Zahnrad-, Membran-, Schlauchpumpen und andere.

Als Mischer (6), die eine hohe Turbulenze erzeugen, können beispielsweise statische Mischer eingesetzt werden.

Aus dem Behälter (3) wird über die Dosierpumpe (5c) im gewünschten Verhältnis zur inhomogenen Mischung aus Polyisocyanat und inerter organischer Phase die wäßrige Phase kontinuierlich zudosiert und dem Emulgiergerät (7) zugeführt. Dabei wird eine Doppelemulsion gebildet.

Als Emulgiergerät (7) sind alle Geräte geeignet, die ein hohes Schergefälle erzeugen, beispielsweise mechanische Rotor-Statorsysteme, Ultraschallgeräte etc.

Die gebildete Emulsion gelangt dann unmittelbar nach dem Verlassen des Emulgiergerätes (7) in die Reaktionszone (8), wo sie im gewünschten Verhältnis mit dem Polyamin aus Behälter (4) über die Dosierpumpe (5d) vermischt wird.

Anschließend wird die gebildete Mikrokapseldispersion in den Behälter (9) überführt, wo gegebenenfalls die Dispersion nachbehandelt werden kann.

Die nach dem erfindungsgemäßen Verfahren hergestellten Mikrokapseln haben eine enge Korngrößenverteilung und eine hohe Diffusionsdichtigkeit gegen das Kernmaterial.

Die nach dem erfindungsgemäßen Verfahren hergestellten Lösungen von Farbstoffvorläufer enthaltenden Mikrokapseln werden zur Herstellung kohlefreier Durchschreibepapiere verwendet. Die Herstellung von Reaktionsdurchschreibepapieren aus Mikrokapseln gehört zum längst bekannten Stand der Technik.

Weitere Details sind den nachstehenden Beispielen zu entnehmen:

**Beispiel 1**

Eine Lösung von 2,7 Gewichtsprozent Kristallviolettlacton und 0,9 Gewichtsprozent N-Benzoylleukomethylenblau in einem Gemisch aus 80 Gewichtsteilen Diisopropyldiphenyl und 20 Gewichtsteilen Isohexadecan werden bereitet.

234,5 Tle. dieser Lösung werden mit 39,5 Tln. biuretiersiertem Hexamethylendiisocyanat über die Dosierpumpen (5a) und (5b) kontinuierlich in einen Staticmischer dosiert und dort miteinander vermischt. Die so gebildete Mischung ist trübe und keine klare Lösung.

Der Strom der organischen Phase wird zusammen mit 320 Tln. einer 0,5 Prozent teilverseiften Polyvinylacetat-Lösung (88 % Verseifungsgrad) kontinuierlich in ein Emulgiergerät mit hohem Schergefälle eingespeist.

Zu der gebildeten Emulsion werden unter Rühren 76 Gew.-Tle. einer 7,2-prozentigen, wäßrigen Hydrazinhydratlösung gegeben.

Die gebildete Mikrokapseldispersion wird anschließend zur Nachbehandlung auf 60°C erwärmt und zwei Stunden bei dieser Temperatur belassen.

**Vergleichsbeispiel**

Die Ausgangsmaterialien und Einsatzmengen sind diegleichen wie in Beispiel 1, jedoch wurde die Farbgeberlösung und das Isocyanat zunächst diskontinuierlich in einem Gefäß unter Rühren miteinander vermischt.

Anschließend wird, ebenfalls unter Rühren, in das gleiche Gefäß die wäßrige Phase zugefügt und die Mischung mit einem Emulgiergerät mit hohem Schergefälle emulgiert. Anschließend erfolgte die Vermischung mit der wäßrigen Hydrazinlösung und Nachbehandlung entsprechend Beispiel 1.

Zum Vergleich der in Beispiel 1 und im Vergleichsbeispiel hergestellten Kapseldispersionen wurden folgende Eigenschaften festgestellt:

1. Korngrößenverteilung

2. Dichtigkeit oder Impermeabilität der Kapselwand gegenüber dem Kernmaterial.

Die Messung der Korngrößenverteilung geschah mit einem handelsüblichen Gerät der Fa. Coulter Electronics (Coulter Counter, Typ TA II) Breite Korngrößenverteilung ergibt große Volumensummenanteile im Bereich des vierfachen durchschnittlichen Durchmessers.

Zur Messung der Dichtigkeit wurden 5,0 Tle. der gebildeten Kapseldispersion mit 10 Teilen Wasser verdünnt und anschließend mit 10 Tln. Kieselsol (Kieselsol F 300 der Fa. Bayer AG) vermischt. Die Mischung wurde auf ein Rohpapier in einer Menge von etwa 5 $g/m^2$ aufgetragen, getrocknet und anschließend 2 Std. bei 70° C und 75 % rel. Feuchte getempert. Eventuelle Undichtigkeiten zeigen sich in einer starken Verblauung der Papiere, da nicht eingekapselte Farbgeberlösung mit Kieselsäure zum Farbstoff reagiert.

Die Stärke der Verfärbung kann beispielsweise als Remissionswert mit "Elrephomat" der Fa. Zeiss ermitteltwerden. Die Remissionswerte werden berechnet nach folgender Formel

$$\frac{I_o - I}{I_o} \times 100 = \text{Remissionswert in \%},$$

worin

$I_o$ = Remissionswert des unbeschichteten Papiers

$I$ = gemessenen Wert der Probe.

Im Falle des Vergleichsbeispiels und des Beispiels 1 ergaben sich folgende Werte für Korngrößenverteilung und Dichtigkeitsmessung:

| | Beispiel 1 | Vergleichsbeispiel |
|---|---|---|
| mittlere Korngröße | 7,2 µm | 5,8 µm |
| Korngrößenanteil über 24 µm | 0 % | 5,2 % |
| Dichtigkeit (% Remission) | 5,6 | 21,4 |

Trotz geringerer mittlerer Kapselgröße ist im Vergleichsbeispiel der Volumenanteil an Kapselgrößen über 24 µm größer als in Beispiel 1. Ferner ist die Kapsel des Vergleichsbeispiels wesentlich undichter, wie an den hohen Remissionswerten erkennbar ist.

**Beispiel 2**

5 Gewichtsteile eines Farbgebers vom Aminofluorantyp wurden in einem Gemisch aus 50 Gewichtsteilen Dodecylbenzol und 50 Gew.-Tln Diisopropyldiphenyl gelöst. 223 Tle. dieser Lösung wurden, wie in Beispiel 1 beschrieben, mit 39,5 Tln. Oxadiazintrion von Desmodur H (NCO-Gehalt 20,5 %) kontinuierlich Vermischt. Anschließend die kontinuierliche vermischung mit 320 Gew.-Tln. 0,5 %-iger Polyvinylalkohollösung und die Emulgierung im Schergefälle. Die Vernetzung erfolgte mit 76 Gew.-Tln. 9,0-prozentiger Diethylentriaminlösung. Die Nachbehandlung erfolgte entsprechend Beispiel 1.

Es wurde eine 40 % Kapseln enthaltende Dispersion der Kapselgröße 7,3 µm erhalten. Der Kapselanteil über 24 µm betrug 0,4 %.

**Beispiel 3**

2 Gew.-Teile eines Farbgebers vom Fluorantyp (Pergascript Rot I6B) werden in 90 Gew.-Teilen Dodecylbenzol und 10 Gew.-Tln. Diisopropyldiphenyl gelöst.

223 Gew.-Tle. dieser Lösung werden kontinuierlich mit 39,5 Gew.-Tln. einer Mischung aus 90 % biuretisiertem Hexamethylendiisocyanat und 10 % Carbodiimid-modifiziertem Polymethylenpolyphenyldiisocyanat (28 % NCO, Desmodur CD der Firma Bayer AG) in den statischen Mischer (6) dosiert. Die gebildete organische Phase ist trübe.

Diese Phase wird kontinuierlich mit 367 Tln. 0,5 % teilverseiftem Polyvinylacetat (Verseifungsgrad 88 %) enthaltenden wäßrigen Phase gemischt und in das Emulgiergerät (7) eingespeist. Zu der gebildeten Emulsion werden 120 ml einer 5,6 %-igen wäßrigen Diethylentriamin-Lösung gegeben. Es wurde eine 35 % Kapseln enthaltende Dispersion erhalten. Der mittlere Kapseldurchmesser betrug 7,5 µm.

**Beispiel 4**

Es wurde wie in Beispiel 4 beschrieben verfahren, als Polyisocyanat jedoch ein Gemisch aus 85 % isocyanuratmodifiziertem Desmodur H (Isocyanatgehalt 20,5 %) und 15 % Polymethylenpolyphenyldiisocyanat verwendet. Es wurde eine 35 % Kapseln enthaltende Dispersion erhalten. Der mittlere Kapseldurchmesser beträgt 7,0 µm.

## Patentansprüche

1. Verfahren zur Herstellung von Mikrokapseln durch Grenzflächen-Polyaddition von Polyisocyanaten und H-aktiven Verbindungen, dadurch gekennzeichnet, daß man in einer ersten Stuffe kontinuierlich eine Emulsion herstellt aus einer inerten organischen Phase und einem dieser inerten organischen Phase unlöslichen Polyisocyanat, diese Emulsion zusammen mit einer zudosierten wässrigen Lösung einem Emulgiergerät kontinuerlich zuführt und der dabei entstandenen Doppelemulsion ein Di- oder Polyamin zusetzt und diese an der Grenzfläche mit dem Polyisocyanat polyaddiert.

2. Verfahren nach Anspruch 1, dadurch gekennzeichnet, daß die organische Phase Farbstoffvorläufer gelöst enthält.

## Claims

1. A process for the production of microcapsules by interfacial polyaddition of polyisocyanates and H-active compounds, characterized in that, in a first step, an emulsion is continuously prepared from an inert organic phase and a polyisocyanate insoluble in this inert organic phase, the emulsion thus prepared is continuously introduced together with an added aqueous solution into an emulsifying machine and a diamine or polyamine is added to the double emulsion formed which is then subjected to polyaddition at the interface with the polyisocyanate.

2. A process as claimed in claim 1, characterized in that the organic phase contains dye precursors in solution.

## Revendications

1. Procédé de fabrication de microcapsules par polyaddition à la surface limite de polyisocyanates et de composés à H-actif, caractérisé en ce que dans un premier stade on prépare en continu une émulsion à partir d'une phase organique inerte et d'un polyisocyanate insoluble dans cette phase organique inerte, en ce qu'on introduit cette émulsion avec une solution aqueuse ajoutée de manière dosée dans un instrument émulsificateur en continu, l'on ajoute à la double émulsion ainsi formée une di- ou polyamine et l'on effectue une polyaddition de celle-ci à la surface limite avec le polyisocyanate.

2. Procédé selon la revendication 1, caractérisé en ce que la phase organique contient en solution un précurseur de colorant.

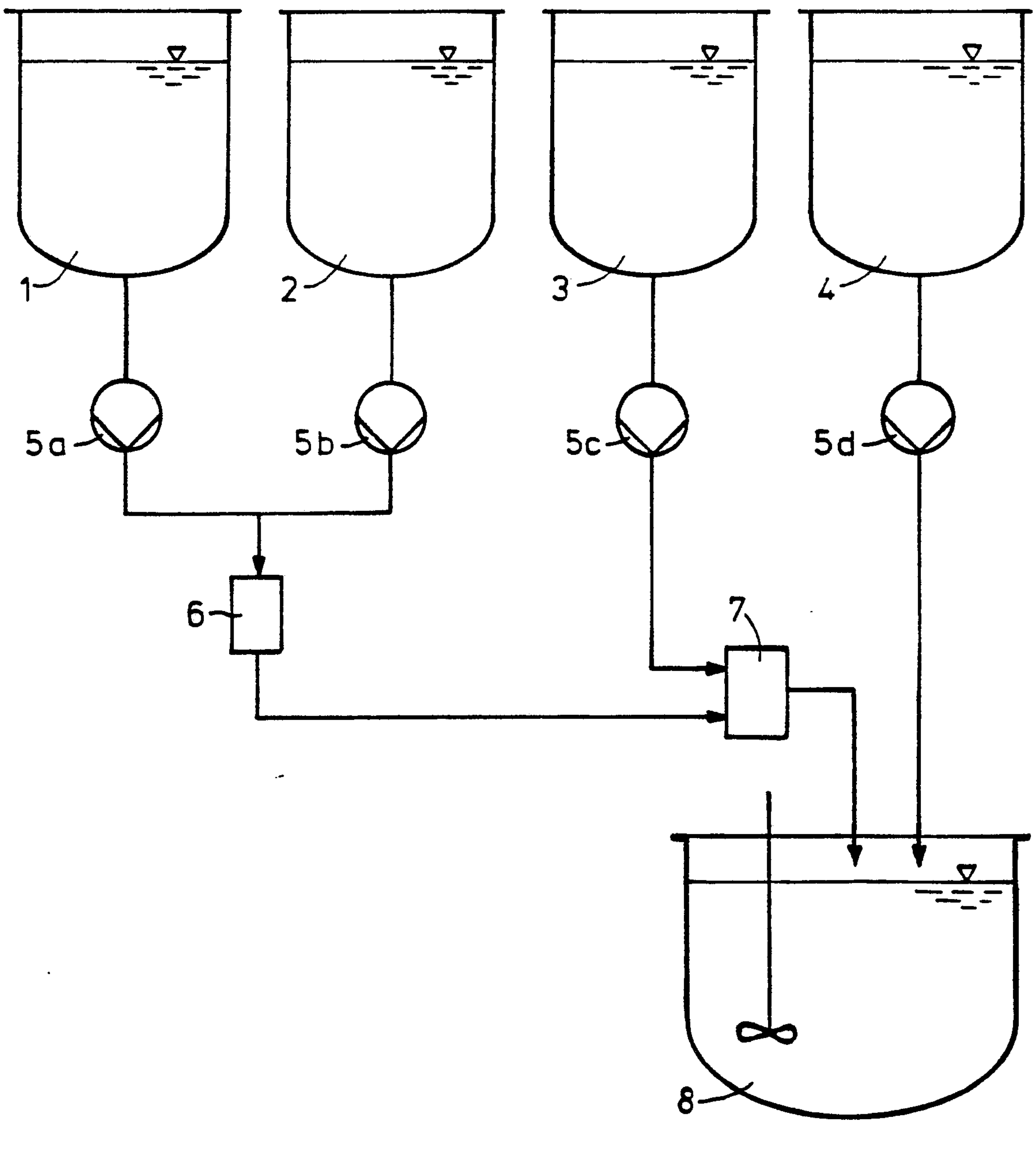
1
2
3
4
5a
5b
5c
5d
6
7
8